# EUROPEAN PATENT APPLICATION

(11) **EP 4 636 914 A2**
(43) Date of publication of application: **22.10.2025**
(21) Application number: 25153666.0
(22) Date of filing: 23.01.2025
(51) Int. Cl.: H01M 50/147, H01M 50/15, H01M 50/176, H01M 50/184, H01M 50/188, H01M 50/55, H01M 50/553

(54) **BATTERY CELL COMPRISING RIVET AND BATTERY DEVICE COMPRISING THE SAME**

(30) Priority: 22.02.2024 KR 20240025429
(71) Applicant: SK On Co., Ltd., Seoul 03161 (KR)
(72) Inventor: CHEONG, Hoemin, 34124 Daejeon (KR); KWAK, Seung Ho, 34124 Daejeon (KR); JU, Seung Hoon, 34124 Daejeon (KR); PAK, Byeong Jun, 34124 Daejeon (KR); LEE, Dong Hyee, 34124 Daejeon (KR)
(74) Representative: Stolmár & Partner Patentanwälte PartG mbB

(57) **Abstract**

A battery cell including an electrode assembly, a case accommodating the electrode assembly, and a cap assembly sealing an opening of the case is provided. The cap assembly includes a terminal plate at least partially exposed to an external space of the cap assembly, a cap plate coupled to the case, a rivet connecting the terminal plate and the cap plate, and a gasket surrounding at least a portion of the rivet. The rivet includes a pillar portion at least partially surrounded by the cap plate, a protrusion portion extending from an outer peripheral surface of the pillar portion, and a first flange located between the terminal plate and the gasket. The gasket includes a first sealing region at least partially located between the protrusion portion and the cap plate, and a second sealing region located between the first flange and the cap plate.

## Description

### TECHNICAL FIELD

The present disclosure disclosed in this patent document generally relate to a battery cell including a rivet, and a battery device including the same.

### BACKGROUND

Unlike a primary battery, a secondary battery may be charged with and discharged of electricity, and may thus be applied to devices within various fields such as a digital camera, a mobile phone, a laptop, a hybrid vehicle, an electric vehicle, and an energy storage system (ESS). The secondary battery may be a lithium-ion battery, a nickel-cadmium battery, a nickel-metal hydride battery, or a nickel-hydrogen battery.

The secondary battery may be classified into a flexible pouch-type battery cell or a square or cylindrical can-type battery cell with rigidity. A plurality of battery cells may be stacked to form a cell assembly.

The cell assembly may be disposed in a case to form a battery module, and a plurality of battery modules may be disposed in a pack frame to form a battery pack. The battery pack may be used in various structures such as a vehicle or an energy storage system.

### SUMMARY

A battery cell may include an electrode assembly, a case accommodating the electrode assembly, and a cap assembly sealing an opening of the case and electrically connected to the electrode assembly.

The cap assembly may include a rivet connecting a terminal plate and a current collecting plate, and a gasket surrounding the rivet. Due to dimensional tolerance or assembly tolerance of components of the cap assembly, a void may be formed between the gasket and the components of the cap assembly. Through the void between the gasket and the components of the cap assembly, an electrolyte of the battery cell or gas generated by the electrode assembly may leak out of the battery cell.

According to an aspect of the present disclosure, a battery cell preventing leakage of an electrolyte and gas generated in the battery cell by increasing a sealing effect of a cap assembly, may be provided.

According to an aspect of the present disclosure, a battery cell reducing a deviation in sealing performance due to assembly tolerance and dimensional tolerance of a product, may be provided.

A battery cell and a battery device, of the present disclosure, may be widely applied in green technology fields such as an electric vehicle, a battery charging station or solar power generation, wind power generation, or the like using batteries, or the like. In addition, the battery cell and the battery device, of the present disclosure, may be used in an eco-friendly electric vehicle, a hybrid vehicle, or the like to help prevent climate change through suppressing air pollution and greenhouse gas emissions.

In some embodiments of the present disclosure, a battery cell includes an electrode assembly, a case accommodating the electrode assembly, and a cap assembly sealing an opening of the case. The cap assembly may include a terminal plate at least partially exposed to an external space of the cap assembly, a cap plate coupled to the case, a rivet connecting the terminal plate and the cap plate, and a gasket surrounding at least a portion of the rivet. The rivet may include a pillar portion at least partially surrounded by the cap plate, a protrusion portion extending from an outer peripheral surface of the pillar portion, and a first flange extending from the pillar portion and located between the terminal plate and the gasket. The gasket may include a first sealing region at least partially located between the protrusion portion and the cap plate, and a second sealing region located between the first flange and the cap plate.

In an embodiment, the protrusion portion may include a first surface extending from the outer peripheral surface, and a second surface extending from the outer peripheral surface to the first surface and closer to the electrode assembly than the first surface. A second angle between the second surface and the outer peripheral surface may be smaller than a first angle between the first surface and the outer peripheral surface.

In an embodiment, a length of the second surface may be formed to be longer than a length of the first surface.

In an embodiment, the cap plate may include a support surface contacting the second sealing region of the gasket, and a protrusion region protruding from the support surface toward the first flange and pressing the gasket.

In an embodiment, the protrusion region may protrude from the support surface by a first length. The protrusion portion may protrude from the outer peripheral surface by a second length, equal to or less than the first length.

In an embodiment, the protrusion portion may include a plurality of protruding patterns contacting the gasket.

In an embodiment, the rivet may include a second flange extending from the pillar portion and spaced apart from the first flange. The protrusion portion may be located between the first flange and the second flange.

In an embodiment, the cap assembly may include an insulating plate disposed below the cap plate. At least a portion of the cap plate may be located between the first flange and the second flange. At least a portion of the insulating plate may be located between the cap plate and the second flange.

In an embodiment, the cap assembly may further include a current collecting plate connected to the second flange of the rivet. The terminal plate may be electrically connected to the electrode assembly using the rivet and the current collecting plate.

In an embodiment, may further include a current collecting member connected to the electrode assembly. The rivet may include a connecting hole penetrating through the pillar portion. The terminal plate may be electrically connected to the electrode assembly using the rivet and the current collecting member. The current collecting member may be inserted into the connection hole.

In an embodiment, the case may include a first opening formed in one side, and a second opening formed in the other side and connected to the first opening. The cap assembly may include a first cap assembly sealing the first opening, and a second cap assembly sealing the second opening.

In an embodiment, the first cap assembly may include an insulator surrounding at least a portion of the terminal plate and at least partially located between the terminal plate and the cap plate. The second cap assembly may include a resistor surrounding at least a portion of the terminal plate and at least partially located between the terminal plate and the cap plate. Electrical conductivity of the resistor may be higher than electrical conductivity of the insulator.

In an embodiment, the terminal plate may include an outer surface, an inner surface opposite to the outer surface and facing the insulator, and a first through-hole penetrating through the outer surface and the inner surface. The cap plate may include an upper surface facing the insulator, a lower surface opposite to the upper surface, and a second through-hole penetrating through the upper surface and the lower surface. The insulator may include a third through-hole located between the first through-hole and the second through-hole. The rivet may be inserted into the first through-hole, the second through-hole, and the third through-hole. The protrusion portion may be located in the second through-hole.

In an embodiment, the cap plate may be connected to a plurality of terminal plates. The plurality of terminal plates may be disposed in the same direction with respect to the cap plate.

A battery device of the present disclosure may include a cell assembly including a plurality of battery cells, and a frame accommodating the cell assembly. Each of the plurality of battery cells may include an electrode assembly, a case accommodating the electrode assembly, and a cap assembly sealing an opening of the case. The cap assembly may include a terminal plate at least partially exposed to an external space of the cap assembly, a cap plate coupled to the case, a rivet connecting the terminal plate and the cap plate, and a gasket surrounding at least a portion of the rivet. The rivet may include a pillar portion at least partially surrounded by the cap plate, a protrusion portion extending from an outer peripheral surface of the pillar portion, and a first flange extending from the pillar portion and located between the terminal plate and the gasket. The gasket may include a first sealing region at least partially located between the protrusion portion and the cap plate, and a second sealing region located between the first flange and the cap plate.

### BRIEF DESCRIPTION OF DRAWINGS

Certain aspects, features, and advantages of the present disclosure may be illustrated by the following detailed description with reference to the accompanying drawings.
FIG. 1 is a perspective view of a battery cell according to an embodiment.
FIG. 2 is an exploded perspective view of a battery cell according to an embodiment.
FIG. 3 is an exploded perspective view of a battery cell according to another embodiment.
FIG. 4 is a cross-sectional view of a cap assembly according to an embodiment.
FIG. 5 is a rear perspective view of the cap assembly of FIG. 4.
FIG. 6 is a cross-sectional view of a cap assembly according to another embodiment.
FIG. 7 is a cross-sectional view of a cap assembly according to another embodiment.
FIGS. 8A and 8B are cross-sectional views of rivets according to various embodiments.
FIG. 9 is a perspective view illustrating an assembly of a gasket and a rivet according to an embodiment.
FIG. 10 is an exploded perspective view of a battery cell according to another embodiment.
FIG. 11 is an exploded perspective view of a battery device according to an embodiment.

### DETAILED DESCRIPTION

Hereinafter, the disclosure of this patent document will be described in detail with reference to the attached drawings. However, this is merely illustrative and the disclosure of this patent document is not limited to the specific embodiments described by way of example.

Terms or words used in the specification and claims described below may not be to be construed as limited to their ordinary or dictionary meanings. The inventor will interpret the meaning and concept consistent with the technical idea of the disclosure of this patent document based on the principle that the concept of the term is appropriately defined in order to explain the disclosure of this patent document in the best manner.

Detailed descriptions of well-known functions and configurations that may obscure the gist of the disclosure of this patent document may be omitted. In the attached drawings, some components may be exaggerated, omitted, or schematically illustrated, and a size of each of the components does not entirely reflect an actual size thereof.

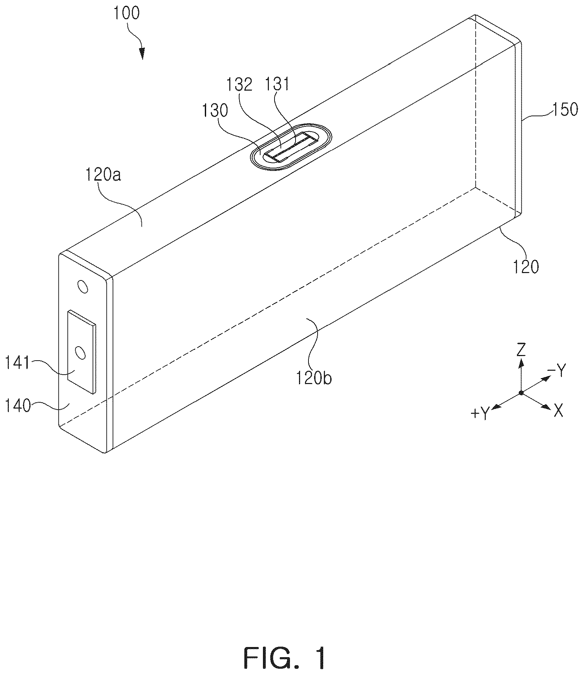

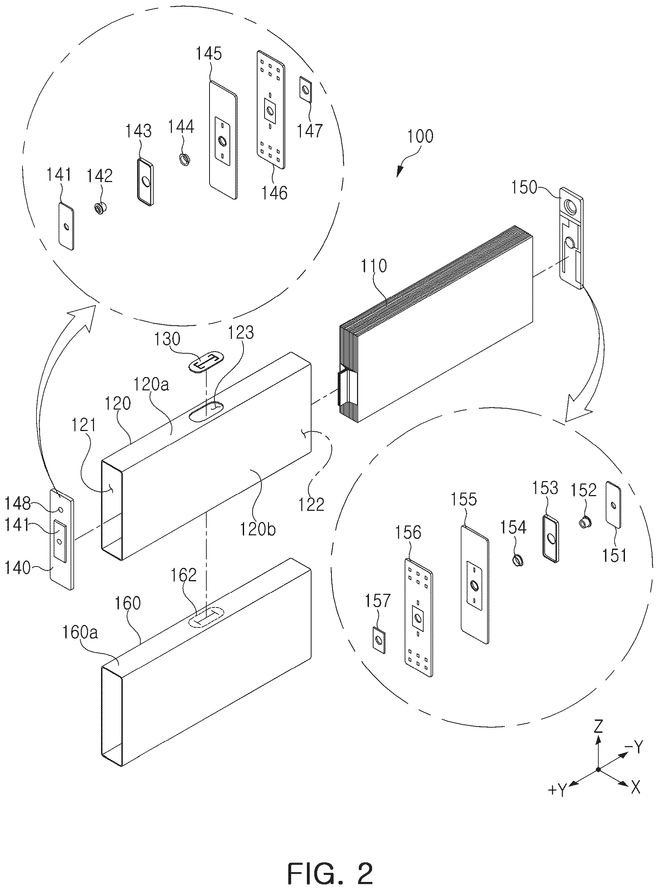

FIG. 1 is a perspective view of a battery cell according to an embodiment. FIG. 2 is an exploded perspective view of a battery cell according to an embodiment.

Referring to FIG. 1 and/or FIG. 2, a battery cell 100 may include an electrode assembly 110, a case 120, a venting portion 130, a cap assembly (140 and 150), and/or an insulating bag 160. The battery cell 100 may be a secondary battery. For example, the battery cell 100 may be a lithium-ion battery, but is not limited thereto. For example, the battery cell 100 may be a nickel-cadmium battery, a nickel-metal hydride battery, or a nickel-hydrogen battery, capable of being charged and discharged.

The electrode assembly 110 may include at least one positive electrode plate, at least one negative electrode plate, and at least one separator. The separator may prevent contact between the positive electrode plate and the negative electrode plate. Those skilled in the art will appreciate that the electrode assembly 110 may be manufactured using a variety of methods. In example embodiments, the electrode assembly may be formed by repeatedly arranging the positive electrode, the negative electrode, and the separator. In some embodiments, the electrode assembly may be a winding type, a stacking type, a Z-fold type, or a stack-folding type.

The case 120 may form at least a portion of an exterior of the battery cell 100, and may accommodate the electrode assembly 110. For example, the case 120 may provide a space in which the electrode assembly 110 and an electrolyte are accommodated. In an embodiment, the case 120 may include aluminum. The case 120 may be referred to as a can or a housing. The case 120 may have a rectangular parallelepiped shape in which substantially at least a portion thereof opens. For example, the case 120 may include a first side surface 120a and a second side surface 120b having a width, greater than a width of the first side surface 120a. The first side surface 120a may be referred to as a narrow surface, and the second side surface 120b may be referred to as a wide surface.

According to an embodiment, the case 120 may include a first opening 121 formed at one side (+Y-direction) of a length direction (Y-axis direction) of the battery cell 100, a second opening 122 formed on the other side (-Y-direction) of the length direction, and a through-hole 123 formed in a height direction (Z-axis direction) of the battery cell 100. The first opening 121, the second opening 122, and the through-hole 123 may be empty spaces connected in an internal space of the case 120. For example, the first opening 121 may be an empty space extending from the second opening 122.

The venting portion 130 may provide a path for releasing gas generated in the case 120 to an external space of the case 120. For example, the venting portion 130 may include a notch portion 131 configured to be ruptured at a specified pressure or higher, and a base 132 coupled to the case 120.

According to an embodiment, the venting portion 130 may be located on the first side surface 120a of the case 120 in which a relatively large stress value appears, among remaining surfaces of the case 120 excluding a portion to which the cap assembly (140 and 150) is coupled. The venting portion 130 may be located between a first cap assembly 140 and a second cap assembly 150. According to an embodiment, at least a portion of the venting portion 130 may be located in the through-hole 123 formed on the first side surface 120a.

In a battery cell 100 including a plurality of cap assemblies 140 and 150 located at both sides of a length direction of the case 120, as in an embodiment of the present disclosure, a space available for a single cap assembly (140 and 150) may be reduced. By forming the venting portion 130 in the case 120, a degree of design freedom of the venting portion 130 may be improved, and discharge of gas in the case 120 may be improved. In this document, the venting portion 130 formed on the first side surface 120a of the case 120 is illustrated, but is illustrative. For example, in another embodiment, the venting portion 130 may be located on the cap assembly (140 and 150).

In an embodiment, the base 132 may be welded and joined to the case 120 along the edge portion. The base 132 may be a plate including aluminum.

In an embodiment, the notch portion 131 may be a recess, a groove, and/or a hole formed in the base 132. The notch portion 131 may be a portion of the venting portion 130 that may be broken earlier than other portions, when a pressure in the case 120 is higher than a predetermined pressure. A thickness of at least a portion of the notch portion 131 may be smaller than a thickness of the base 132. Since at least a portion of the gas generated in the case 120 is discharged through an empty space of the venting portion 130 formed as the notch portion 131 is broken, a gas discharge direction may be controlled, as viewed from the battery cell 100.

The cap assemblies 140 and 150 may be respectively coupled to both sides of a length direction (e.g., Y-axis direction) of the case 120. For example, the cap assembly (140 and 150) may accommodate the electrode assembly 110 and the electrolyte, together with the case 120. The cap assemblies 140 and 150 may include the first cap assembly 140 coupled to an end portion at one side (e.g., +Y-direction) of the case 120, and the second cap assembly 150 coupled to an end portion at the other side (e.g., -Y-direction) of the case 120. The cap assemblies 140 and 150 may seal the openings 121 and 122 of the case 120. The first cap assembly 140 may seal the first opening 121 of the case 120. The second cap assembly 150 may seal the second opening 122 of the case 120.

The cap assembly (140 and 150) may include a plurality of components. For example, the cap assembly (140 and 150) may include a terminal plate (141 and 151), a rivet (142 and 152), an insulator 143, a resistor 153, a gasket (144 and 154), a cap plate (145 and 155), an insulating plate (146 and 156), and/or a current collecting plate (147 and 157).

The terminal plate (141 and 151) may have positive polarity or negative polarity. For example, based on the drawings, a first terminal plate 141 located at one side (e.g., +Y-direction) of the case 120 may have a negative polarity, and a second terminal plate 151 located at the other side (e.g., -Y-direction) of the case 120 may have a positive polarity. For example, the terminal plate (141 and 151) may be electrically connected to the electrode assembly 110 through electrode tabs, respectively. The terminal plate (141 and 151) may include a substantially conductive material (e.g., metal).

The terminal plate (141 and 151) may be coupled to one surface of the cap plate (145 and 155). The one surface of the cap plate (145 and 155) may be a surface facing an external space of the battery cell 100. For example, the one side of the cap plate (145 and 155) may be a surface, opposite to a surface facing an inside of the case 120. When the battery cell 100 is coupled to a battery module or a battery pack, the battery cell 100 may be electrically connected to an adjacent battery cell 100 through the terminal plate (141 and 151).

The rivet (142 and 152) may combine at least a portion of components of the cap assembly (140 and 150) (e.g., terminal plate (141 and 151), the insulator 143, the resistor 153, the cap plate (145 and 155), and the insulating plate (146 and 156)). The rivet (142 and 152) may penetrate at least a portion of the cap assembly (140 and 150) in a thickness direction (e.g., Y-axis direction). The terminal plate (141 and 151), the insulator 143, the resistor 153, the cap plate (145 and 155), and the insulating plate (146 and 156) may include a hole for accommodating the rivet (142 and 152).

The rivet (142 and 152) may electrically connect the terminal plate (141 and 151) and the current collecting plate (147 and 157). For example, current from the electrode assembly 110 may be transmitted through the current collecting plate (147 and 157) and the rivet (142 and 152) to the terminal plate (141 and 151). The rivet (142 and 152) may include a substantially conductive material (e.g., metal).

The insulator 143 and the resistor 153 may prevent direct contact between the terminal plate (141 and 151) and the cap plate (145 and 155). For example, the insulator 143 may surround at least a portion of the first terminal plate 141. At least a portion of the insulator 143 may be located between the first terminal plate 141 and a first cap plate 145.

The resistor 153 may surround at least a portion of the second terminal plate 151. At least a portion of the resistor 153 may be located between the second terminal plate 151 and a second cap plate 155. A portion of current generated in the electrode assembly 110 may be transferred to the case 120 through the second terminal plate 151 and the resistor 153, and the case 120 may be charged to have polarity. In an embodiment, the resistor 153 may be replaced with an insulator. In an embodiment, the insulator 143 may be referred to as an outer insulating plate. The resistor 153 may be referred to as an outer resistive plate. Electrical conductivity of the resistor 153 may be higher than electrical conductivity of the insulator 143.

The insulating plate (146 and 156) may prevent contact between the cap plate (145 and 155) and the rivet 220 and direct contact between the cap plate (145 and 155) and the current collecting plate (147 and 157). For example, the insulating plate (146 and 156) may be disposed between the cap plate (145 and 155) and an internal space of the battery cell 100.

The gasket (144 and 154) may seal a gap formed in the cap assembly (140 and 150). The gasket (144 and 154) may prevent leakage of the electrolyte in the case 120 and/or the gas generated in the electrode assembly 110 to the external space of the case 120. The gasket (144 and 154) may surround at least a portion of the rivet (142 and 152). At least a portion of the gasket (144 and 154) may be located between the rivet (142 and 152) and the cap plate (145 and 155). The terminal plate (141 and 151), the insulator 143, the resistor 153, the cap plate (145 and 155), and the insulating plate (146 and 156) may include a hole for accommodating the rivet (142 and 152). The gasket (144 and 154) may be fitted into a hole of the terminal plate (141 and 151), a hole of the insulator 143, a hole of the resistor 153, a hole of the cap plate (145 and 155), and/or a hole of the insulating plate (146 and 156). In an embodiment, the gasket (144 and 154) may be referred to as a sealing member. The gasket (144 and 154) may include a substantially insulating material.

The cap plate (145 and 155) may be coupled to the case 120 to seal the case 120. For example, the cap plate (145 and 155) may be formed of aluminum or a material including aluminum. The cap plate (145 and 155) may be laser welded to the case 120 along an edge portion. The cap plate (145 and 155) may include the first cap plate 145 sealing the first opening 121 of the case 120, and the second cap plate 155 sealing the second opening 122 of the case 120. At least one of the cap plate (145 and 155) may include an electrolyte injection port 148 for injecting the electrolyte into the case 120. The electrolyte injection port 148 may be sealed with a stopper or the like after the electrolyte is injected. The cap plate (145 and 155) may include a substantially conductive material (e.g., metal).

The insulating plate (146 and 156) may prevent contact between the cap plate (145 and 155) and the current collecting plate (147 and 157). The insulating plate (146 and 156) may include a substantially insulating material.

The current collecting plate (147 and 157) may be connected to the negative electrode plate or the positive electrode plate of the electrode assembly 110, respectively, and may have negative polarity or positive polarity. The current collecting plate (147 and 157) may be disposed on the other surface of the cap plate (145 and 155). The current collecting plate (147 and 157) may be in contact with the rivet (142 and 152) and electrically connected to the rivet (142 and 152). The current collecting plate (147 and 157) may include a substantially conductive material.

Since components of the cap assembly (140 and 150) described above are only illustrative, some of the components of the cap assembly (140 and 150) may be omitted or other configurations not described may be added.

In an embodiment, the insulating bag 160 may be used to insulate the case 120 of the battery cell 100. For example, the insulating bag 160 may include an insulating material. The insulating bag 160 may be referred to as a tape, a protective film, a protective member, a protective tape, an insulating film, an insulating member, and/or an insulating tape. According to an embodiment, the insulating bag 160 may include an adhesive material for coupling to the case 120 and the venting portion 130.

The insulating bag 160 may cover at least a portion of the case 120. Although the insulating bag 160 is illustrated in this document as entirely covering the case 120, a position at which the insulating bag 160 covers the case 120 may be changed depending on a design. For example, in an embodiment, one side surface 160a of the insulating bag 160 may cover at least a portion of the venting portion 130 and at least a portion of the first side surface 120a of the case 120. According to an embodiment, at least a portion of the insulating bag 160 may be folded to overlap. According to an embodiment, a cover region 162 of the insulating bag 160 may cover the venting portion 130. After the notch portion 131 of the venting portion 130 is broken, at least a portion of the insulating bag 160 (e.g., cover region 162) may be in contact with at least a portion of a venting gas passed through the notch portion 131 of the venting portion 130, and may be melted.

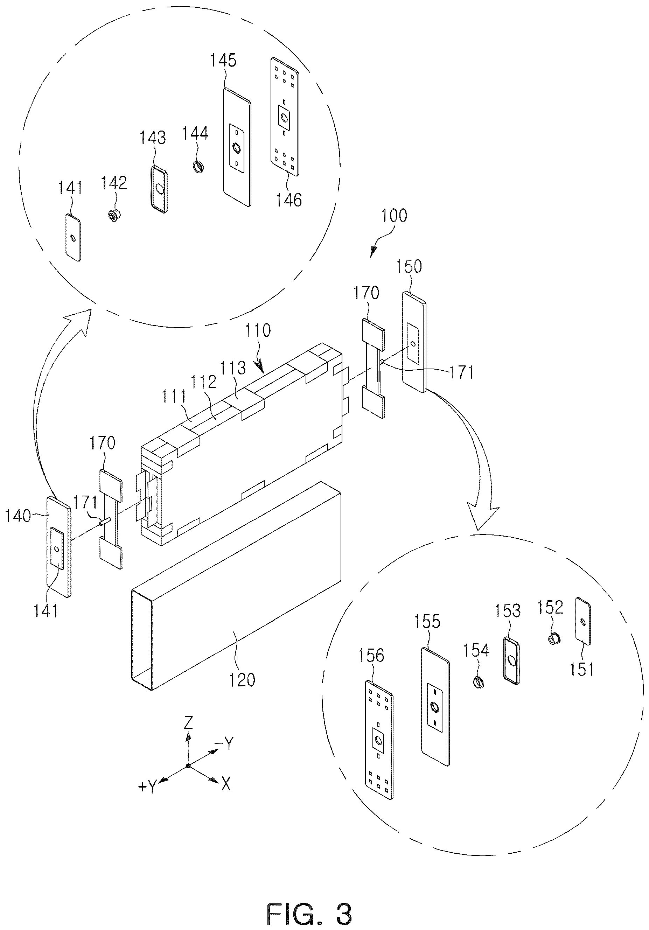

FIG. 3 is an exploded perspective view of a battery cell according to another embodiment.

Referring to FIG. 3, a battery cell 100 may include an electrode assembly 110, a case 120, and/or a cap assembly (140 and 150). At least a portion of descriptions of the battery cell 100, the electrode assembly 110, the case 120, and/or the cap assembly (140 and 150) of FIG. 1 and/or FIG. 2 may be applied to the battery cell 100, the electrode assembly 110, the case 120, and/or the cap assembly (140 and 150) of FIG. 3.

In an embodiment, the electrode assembly 110 may be provided as a plurality of electrode assemblies 111 and 112. The plurality of electrode assemblies 111 and 112 may be connected to each other using a connecting tape 113.

The battery cell 100 may include a current collecting member 170 electrically connecting the electrode assembly 110 and the cap assembly (140 and 150) . The current collecting member 170 may be connected to the electrode assembly 110 and a rivet (142 and 152). The current collecting member 170 may include a current collector pin 171 coupled to the rivet (142 and 152) . Current of the electrode assembly 110 may be transmitted to the rivet (142 and 152) and a terminal plate (141 and 151) through the current collecting member 170. In an embodiment, the current collecting plate (147 and 157) of FIG. 2 may be replaced with the current collecting member 170 of FIG. 3.

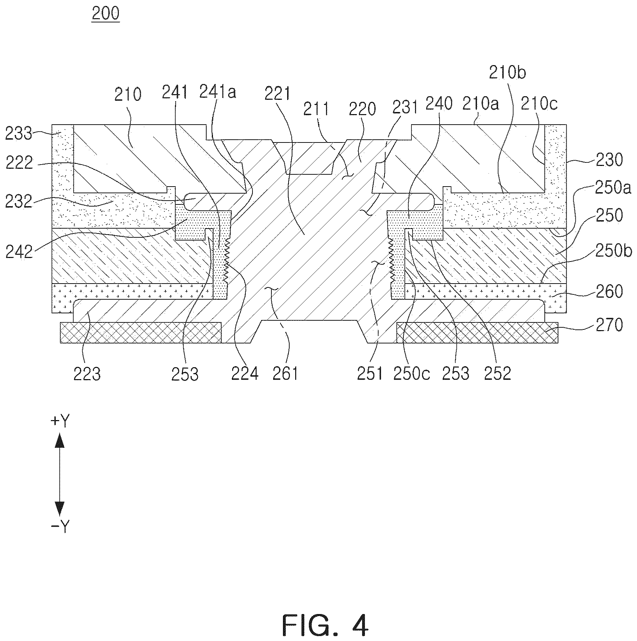

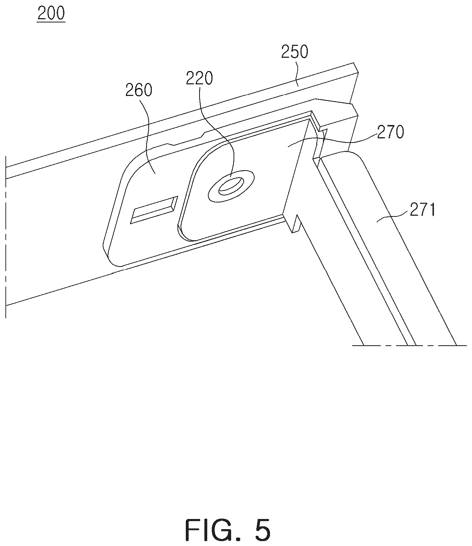

FIG. 4 is a cross-sectional view of a cap assembly according to an embodiment. FIG. 5 is a rear perspective view of the cap assembly of FIG. 4.

Referring to FIG. 4 and/or FIG. 5, a cap assembly 200 may include a terminal plate 210, a rivet 220, an insulator 230, a gasket 240, a cap plate 250, an insulating plate 260, and a current collecting plate 270. At least a portion of descriptions of the cap assembly (140 and 150), the terminal plate (141 and 151), the rivet (142 and 152), the insulator 143, the gasket (144 and 154), the cap plate (145 and 155), the insulating plate (146 and 156), and the current collecting plate (147 and 157) of FIGS. 1 and/or 2 may be applied to the cap assembly 200, the terminal plate 210, the rivet 220, the insulator 230, the gasket 240, the cap plate 250, the insulating plate 260, and the current collecting plate 270 of FIGS. 4 and 5.

The terminal plate 210 may include an outer surface 210a facing an external space of the cap assembly 200, an inner surface 210b opposite to the outer surface 210a, and an outer side surface 210c extending from the outer surface 210a to the inner surface 210b. At least a portion of the terminal plate 210 (e.g., outer surface 210a) may be exposed to an external space of the battery cell (e.g., battery cell 100 of FIG. 1). At least a portion of the inner surface 210b and the outer side surface 210c of the terminal plate 210 may face the insulator 230.

The terminal plate 210 may include a first through-hole 211 penetrating through the outer surface 210a and the inner surface 210b. The first through-hole 211 may accommodate at least a portion of the rivet 220. For example, the rivet 220 may be connected to the terminal plate 210 while penetrating through the outer surface 210a and the inner surface 210b of the terminal plate 210.

The rivet 220 may fasten the terminal plate 210, the insulator 230, the gasket 240, the cap plate 250, and the insulating plate 260. For example, the rivet 220 may connect the terminal plate 210 and the cap plate 250. At least a portion of the rivet 220 may be inserted into the first through-hole 211 of the terminal plate 210, a second through-hole 251 of the cap plate 250, a third through-hole 231 of the insulator 230, and a fourth through-hole 261 of the insulating plate 260. In an embodiment, the rivet 220 may be referred to as a rivet terminal.

The rivet 220 may include a pillar portion 221 at least partially surrounded by the cap plate 250, and a flange (222 and 223) extending from the pillar portion 221. The flange (222 and 223) may include a first flange 222 contacting the terminal plate 210, and a second flange 223 spaced apart from the first flange 222 and contacting the insulating plate 260. The first flange 222 may be located between the terminal plate 210 and the gasket 240. In an embodiment, the first flange 222 and the second flange 223 may press the gasket 240, the cap plate 250, and the insulating plate 260, to fasten the gasket 240, the cap plate 250, and the insulating plate 260. A portion of the gasket 240, a portion of the cap plate 250, and a portion of the insulating plate 260 may be located between the first flange 222 and the second flange 223. In an embodiment, the rivet 220 may be inserted into the gasket 240 with the first flange 222, and may be deformed by a tool to have the second flange 223.

The rivet 220 may have a shape for providing pressure to the gasket 240 at a designated point. The rivet 220 may include a protrusion portion 224 extending from an outer peripheral surface 221a of the pillar portion 221. The protrusion portion 224 may be in contact with the gasket 240. Sealing performance of the gasket 240 may be improved by the protrusion portion 224. For example, the protrusion portion 224 may provide pressure to the gasket 240, to deform (e.g., compress) the gasket 240 and reduce an empty space between the gasket 240 and the rivet 220 and/or between the gasket 240 and the cap plate 250. The protrusion portion 224 may be located to face an inner side surface 250c of the cap plate 250. By the protrusion portion 224, the gasket 240 may be brought into close contact with the rivet 220 and a portion (e.g., inner side surface 250c) of the cap plate 250. In an embodiment, the protrusion portion 224 may be formed integrally with the pillar portion 221. The protrusion portion 224 may be located between the first flange 222 and the second flange 223 of the rivet 220. The protrusion portion 224 may be in contact with a portion of the gasket 240 (e.g., first sealing region 241) located between the first flange 222 and the second flange 223.

In an embodiment, the protrusion portion 224 may include a plurality of protruding patterns. The plurality of protruding patterns may be in contact with the gasket 240. Contact area between the protrusion portion 224 and the gasket 240 may increase by the plurality of protruding patterns, and close contact capability (close contact performance or close contact force) of the gasket 240 to the rivet 220 and the cap plate 250 may increase. Since the gasket 240 may be compressed by the protrusion portion 224, a deviation in sealing performance due to assembly tolerance and dimensional tolerance of the cap assembly 200 may be reduced.

In an embodiment, surface roughness of a portion (e.g., protrusion portion 224) of the rivet 220 on which the plurality of protruding patterns are formed may be higher than surface roughness of a portion of the rivet 220 on which the protrusion portion 224 is not formed.

The insulator 230 may surround at least a portion of the terminal plate 210. For example, the insulator 230 may prevent contact between the terminal plate 210 and the cap plate 250. The insulator 230 may include a support region 232 supporting the inner surface 210b of the terminal plate 210, and a side wall region 233 extending from the support region 232 and surrounding the outer side surface 210c of the terminal plate 210. The terminal plate 210 may be coupled to the insulator 230 by being fitted into the support region 232 and the side wall region 233 of the insulator 230. The insulator 230 may accommodate at least a portion of the rivet 220. For example, the support region 232 of the insulator 230 may include the third through-hole 231. The third through-hole 231 may be located between the first through-hole 211 and the second through-hole 251.

A portion of the rivet 220 may be located in the third through-hole 231. The insulator 230 may include an insulating material. In an embodiment, the insulator 230 may be replaced with a resistor (e.g., resistor 153 of FIG. 1). For example, when the cap assembly 200 is connected to a positive electrode of the electrode assembly (e.g., electrode assembly 110 of FIG. 2), the cap assembly 200 may include the insulator 230. When the cap assembly 200 is connected to a negative electrode of the electrode assembly 110, the insulator 230 of the cap assembly 200 may be replaced with the resistor 153.

The gasket 240 may surround at least a portion of the rivet 220, and may seal a gap formed around the rivet 220. The gasket 240 may be in contact with the terminal plate 210, the rivet 220, the insulator 230, the cap plate 250, and the insulating plate 260, and may seal a gap located between the terminal plate 210, the rivet 220, the insulator 230, the cap plate 250, and the insulating plate 260. The gasket 240 may seal a space between the insulator 230 and the rivet 220, a space between the cap plate 250 and the rivet 220, and a space between the insulating plate 260 and the rivet 220. The gasket 240 may be located in the second through-hole 251 of the cap plate 250, the third through-hole 231 of the insulator 230, and the fourth through-hole 261 of the insulating plate 260.

The gasket 240 may be formed of an elastic material (e.g., polymer and/or rubber). The gasket 240 may be deformed (e.g., compressed), based on a shape of a substantially rigid body (e.g., rivet 220 and cap plate 250). In an embodiment, the gasket 240 may be referred to as a sealing member. The gasket 240 may include a substantially insulating material. The gasket 240 may prevent contact between the rivet 220 and the cap plate 250. Unintended charging of the cap plate 250 may be prevented by the gasket 240.

The gasket 240 may include a first sealing region 241 surrounding the pillar portion 221 of the rivet 220. The first sealing region 241 may be a portion of the gasket 240 located in a space between the pillar portion 221 and the inner side surface 250c of the cap plate 250 and in a space between the pillar portion 221 and an inner side surface 260c of the insulating plate 260. At least a portion of the first sealing region 241 may be located between the protrusion portion 224 and the cap plate 250. At least a portion of the first sealing region 241 may be in contact with the protrusion portion 224 of the rivet 220. The first sealing region 241 may be deformed, based on pressure or force transmitted by the protrusion portion 224. By deforming the first sealing region 241, close contact capability between the gasket 240 and the pillar portion 221 of the rivet 220 and close contact capability between the gasket 240 and the inner side surface 250c of the cap plate 250 may increase. By pressing the gasket 240 by rigid bodies (e.g., inner side surface 250c of the cap plate 250 and the protrusion portion 224 of the rivet 220), sealing capability (sealing performance or sealing force) of the gasket 240 may be improved.

The gasket 240 may include a second sealing region 242 contacting the first flange 222 of the rivet 220. The second sealing region 242 may be a portion of the gasket 240 extending from the first sealing region 241. For example, the second sealing region 242 may seal a gap between the terminal plate 210, the rivet 220, the insulator 230, and the cap plate 250. At least a portion of the second sealing region 242 may be deformed based on pressure or force transmitted by a protrusion region 253 of the cap plate 250. By deforming the second sealing region 242, close contact capability between the gasket 240 and the first flange 222 of the rivet 220, and close contact capability between the gasket 240 and a surface of the cap plate 250 (e.g., upper surface 250a and/or support surface 252) may increase.

At least a portion of the cap plate 250 may be surrounded by the insulator 230, the gasket 240, and the insulating plate 260. For example, the cap plate 250 may include an upper surface 250a facing the insulator 230, a lower surface 250b opposite to the upper surface 250a and facing the insulating plate 260, and an inner side surface 250c extending from the upper surface 250a to the lower surface 250b and defining the second through-hole 251. The cap plate 250 may be located between the insulator 230 and the insulating plate 260. The cap plate 250 may be located below (e.g., -Y-direction) of the insulator 230 and above (e.g., +Y-direction) of the insulating plate 260.

The cap plate 250 may include the second through-hole 251 penetrating through the upper surface 250a and the lower surface 250b. The second through-hole 251 may accommodate at least a portion of the rivet 220. The second through-hole 251 may be a hollow space surrounded by the inner side surface 250c of the cap plate 250. For example, the rivet 220 may be connected to the terminal plate 210 while penetrating through the upper surface 250a and the lower surface 250b of the cap plate 250.

A portion of the cap plate 250 may be formed to be curved or include a groove. For example, the cap plate 250 may include a support surface 252 contacting the second sealing region 242 of the gasket 240, and a protrusion region 253 protruding from the support surface 252.

The support surface 252 may be a surface of the cap plate 250 recessed with respect to the upper surface 250a of the cap plate 250. The support surface 252 may be located below (e.g., -Y-direction) the cap assembly 200, as compared to the upper surface 250a. The protrusion region 253 may protrude from the support surface 252 toward an upper portion (+Y-direction) of the cap assembly 200. By the support surface 252 and the protrusion region 253, a contact area between the gasket 240 and the cap plate 250 may increase, and a sealing capability of the gasket 240 may be improved. The second sealing region 242 may be located between the first flange 222 and the cap plate 250. For example, at least a portion of the second sealing region 242 of the gasket 240 may be located between the protrusion region 253 and the first flange 222 of the rivet 220. At least a portion of the second sealing region 242 may be in contact with the protrusion region 253 of the cap plate 250. The second sealing region 242 may be deformed, based on pressure or force transmitted by the protrusion portion 224. By deforming the second sealing region 242, sealing force between the gasket 240 and the first flange 222 of the rivet 220 and close contact capability between the gasket 240 and the upper surface 250a of the cap plate 250 may increase. By pressing the gasket 240 by rigid bodies (e.g., upper surface 250a of the cap plate 250 and the first flange 222 of the rivet 220, close contact capability of the gasket 240 may be improved.

The insulating plate 260 may prevent contact between the cap plate 250 and the rivet 220. For example, the insulating plate 260 may be located below (e.g., -Y) the cap plate 250. The insulating plate 260 may be located between the cap plate 250 and the second flange 223 of the rivet 220.

The current collecting plate 270 may electrically connect an electrode assembly (e.g., electrode assembly 110 of FIG. 1) and the rivet 220. For example, the current collecting plate 270 may be connected to a conductive connecting member 271 connected to the electrode assembly 110. Current of the electrode assembly 110 may be transmitted to an external space of the battery cell 100 through the connecting member 271, the current collecting plate 270, the rivet 220, and the terminal plate 210. The terminal plate 210 may be electrically connected to the electrode assembly 110 using the rivet 220 and the current collecting plate 270.

The current collecting plate 270 may be coupled or connected to the second flange 223 of the rivet 220. In an embodiment, the current collecting plate 270 may be coupled to the rivet 220 by welding or caulking.

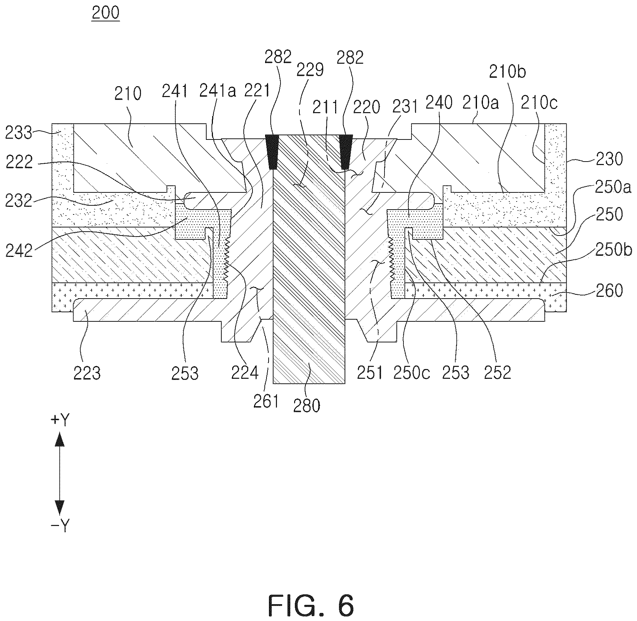

FIG. 6 is a cross-sectional view of a cap assembly according to another embodiment.

Referring to FIG. 6, a cap assembly 200 may include a terminal plate 210, a rivet 220, an insulator 230, a gasket 240, a cap plate 250, an insulating plate 260, and a current collecting member 280. At least a portion of descriptions of the cap assembly (140 and 150) and the current collecting member 170 of FIG. 3 may be applied to the cap assembly 200 and the current collecting member 280 of FIG. 6. At least a portion of descriptions of the cap assembly 200, the terminal plate 210, the rivet 220, the insulator 230, the gasket 240, the cap plate 250, and the insulating plate 260 of FIG. 4 and/or FIG. 5 may be applied to the cap assembly 200, the terminal plate 210, the rivet 220, the insulator 230, the gasket 240, the cap plate 250, and the insulating plate 260 of FIG. 6.

The rivet 220 may be connected to the current collecting member 280. For example, the rivet 220 may include a connecting hole 229. The connecting hole 229 may penetrate a pillar portion 221. The connecting hole 229 may be a through-hole formed in the pillar portion 221 of the rivet 220. The current collecting member 280 may be inserted into the connecting hole 229 of the rivet 220. For example, a portion of the current collecting member 280 may be formed as a current collector pin (e.g., current collector pin 171 of FIG. 3), and may be located in the connecting hole 229. The current collecting member 280 may be connected to an electrode assembly (e.g., electrode assembly 110 of FIG. 3).

The current collecting member 280 may be coupled to the rivet 220. In an embodiment, in a state in which the current collecting member 280 is inserted into the connecting hole 229, the current collecting member 280 may be welded to the rivet 220. By welding the current collecting member 280 and the rivet 220, the cap assembly 200 may include a joint 282 connecting the pillar portion 221 of the rivet 220 and the current collecting member 280.

Current of an electrode assembly (e.g., electrode assembly 110 of FIG. 3) may be transmitted to an external space of a battery cell (e.g., battery cell 100 of FIG. 3) through the current collecting member 280, the rivet 220, and the terminal plate 210. The terminal plate 210 may be electrically connected to the electrode assembly 110 using the rivet 220 and the current collecting member 280.

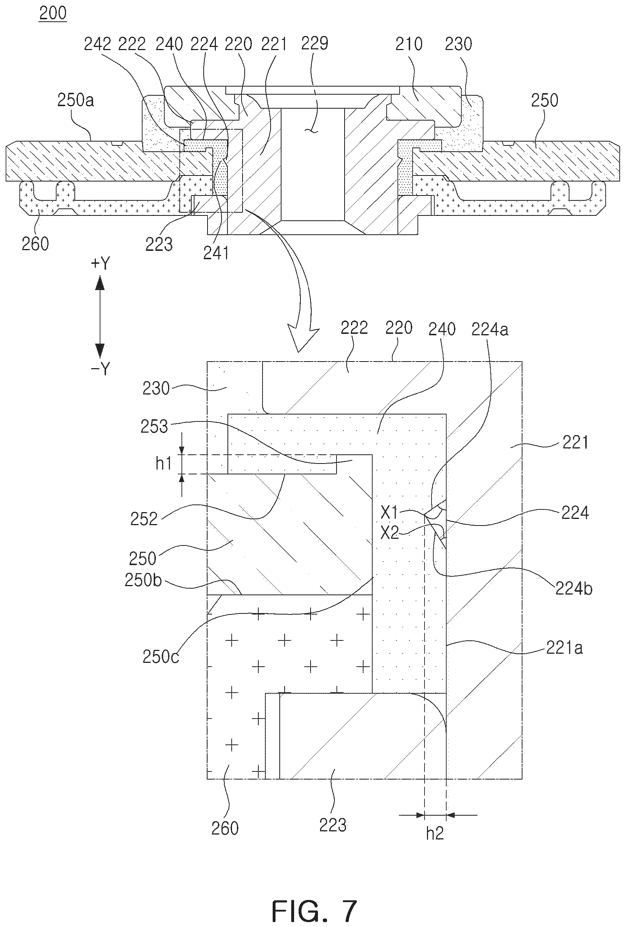

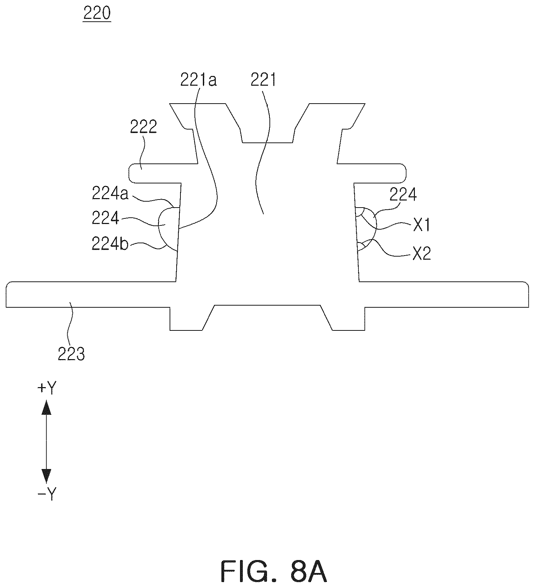

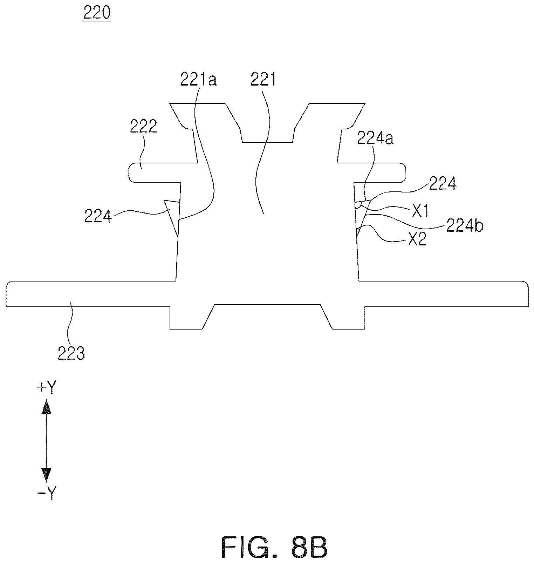

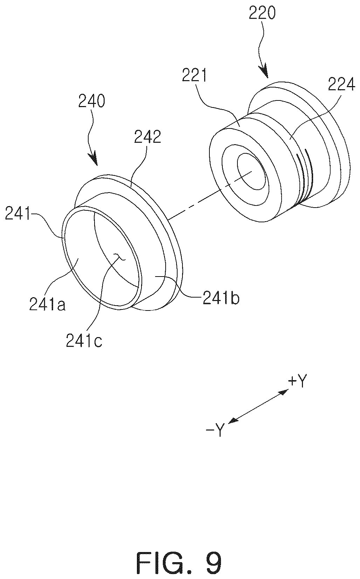

FIG. 7 is a cross-sectional view of a cap assembly according to another embodiment. FIGS. 8A and 8B are cross-sectional views of rivets according to various embodiments. FIG. 9 is a perspective view illustrating an assembly of a gasket and a rivet according to an embodiment.

Referring to FIG. 7, a cap assembly 200 may include a terminal plate 210, a rivet 220, an insulator 230, a gasket 240, a cap plate 250, and an insulating plate 260.

At least a portion of descriptions of the cap assembly 200, the terminal plate 210, the rivet 220, the insulator 230, the gasket 240, the cap plate 250, and the insulating plate 260 of FIG. 4 and/or FIG. 6 may be applied to the cap assembly 200, the terminal plate 210, the rivet 220, the insulator 230, the gasket 240, the cap plate 250, and the insulating plate 260 of FIG. 7.

The rivet 220 may include a protrusion portion 224 that presses the gasket 240. The protrusion portion 224 may be formed in a shape to ensure ease of assembly with the gasket 240. For example, the protrusion portion 224 may include a first surface 224a extending from an outer peripheral surface 221a of a pillar portion 221, and a second surface 224b extending from the outer peripheral surface 221a to the first surface 224a. The first surface 224a may be located closer to an external space of a battery cell (e.g., battery cell 100 of FIG. 1), as compared to the second surface 224b. For example, the first surface 224a may be located in the first direction (+Y-direction) with respect to the second surface 224b, and the first surface 224a may be located closer to the terminal plate 210 and a first flange 222, as compared to the second surface 224b. The second surface 224b may be located closer to an electrode assembly (e.g., electrode assembly 110 of FIG. 2), as compared to the first surface 224a.

In an embodiment, the first surface 224a may be an inclined surface inclined at a first angle X1 with respect to the outer peripheral surface 221a. The second surface 224b may be an inclined surface inclined at a second angle X2 with respect to the outer peripheral surface 221a. The second surface 224b may be formed to have a gentler angle than the first surface 224a. For example, the second angle X2 between the second surface 224b and the outer peripheral surface 221a may be smaller than the first angle X1 between the first surface 224a and the outer peripheral surface 221a. By forming the second angle X2 to be smaller than the first angle X1, ease of assembly of the cap assembly 200 may increase. As another example, based on a point in which the protrusion portion 224 is spaced from the outer peripheral surface 221a of the column 221 to the maximum, a portion of a surface of the protrusion portion 224 adjacent to the first flange 222 may be referred to as a first surface 224a, and another portion of the surface of the protrusion portion 224 adjacent to a second flange 223 may be referred to as a second surface 224b. A length of the second surface 224b may be formed longer than a length of the first surface 224a.

The gasket 240 may include a first sealing region 241 and a second sealing region 242 extending from the first sealing region 241 and facing the first flange 222. The first sealing region 241 may include an inner side surface 241a facing the pillar portion 221 of the rivet 220, and an outer side surface 241b opposite to the inner side surface 241a. The inner side surface 241a of the first sealing region 241 may define a hole 241c accommodating the pillar portion 221. For example, the first sealing region 241 may be formed in a substantially closed curve shape. After the pillar portion 221 of the rivet 220 is inserted into the hole 241c of the gasket 240, a portion of the rivet 220 may be deformed using a tool. For example, the rivet 220 may be deformed to have the second flange 223.

Referring to an embodiment (e.g., FIG. 9), the gasket 240 may be coupled to the rivet 220 while moving in one direction (e.g., +Y-direction) with respect to the rivet 220. When the gasket 240 is coupled to the rivet 220, the second surface 224b of the protrusion portion 224 may be in contact with the gasket 240, earlier than the first surface 224a. Since the second angle X2 is formed smaller than the first angle X1, ease of assembly of the gasket 240 and the rivet 220 may increase.

A shape of the protrusion portion 224 illustrated in FIG. 7 is illustrative. For example, when the protrusion portion 224 has a shape for reducing frictional force due to contact between the protrusion portion 224 and the gasket 240, the shape of the protrusion portion 224 may be selectively designed. According to an embodiment (e.g., FIG. 8A), at least a portion of a surface of the protrusion portion 224 may be formed as a curved surface. For example, the first surface 224a and the second surface 224b of the protrusion portion 224 may be formed as a curved surface. Since the first surface 224a and the second surface 224b may be formed as a curved surface, breakage of the gasket 240 may be reduced. According to an embodiment (e.g., FIG. 8B), the first angle X1 may be formed at an obtuse angle. Since the first angle X1 may be formed at an obtuse angle, detachment of the gasket 240 may be reduced.

The cap assembly 200 may be formed in a shape, to prevent damage to the gasket 240 and to increase a sealing effect.

The cap plate 250 may include a support surface 252 supporting the second sealing region 242 of the gasket 240, and a protrusion region 253 protruding from the support surface 252 in the first direction (+Y-direction). The support surface 252 may be located parallel to an upper surface 250a of the cap plate 250 or substantially on the same plane as the upper surface 250a.

At least a portion of the second sealing region 242 may be compressed by the protrusion region 253. As the second sealing region 242 is compressed, sealing capability of the second sealing region 242 may be improved. The protrusion region 253 may be protruded or extended by a first length h1 with respect to the support surface 252. The first length h1 may be changed based on an appropriate amount of compression according to a material of the gasket 240.

The rivet 220 may include a pillar portion 221 facing the first sealing region 241 of the gasket 240, and a protrusion portion 224 protruding from the pillar portion 221. At least a portion of the first sealing region 241 may be compressed by the protrusion portion 224. By compressing the first sealing region 241, sealing capability of the first sealing region 241 may be improved. The protrusion portion 224 may protrude or extend by a second length h2 with respect to an outer peripheral surface 221a of the pillar portion 221.

The second length h2 of the protrusion portion 224 may be formed to be equal to or less than the first length h1 of the protrusion region 253. In an embodiment, a compressed size of the first sealing region 241 contacting the protrusion portion 224 may be smaller than a compressed size of the second sealing region 242 contacting the protrusion portion 253. By forming the second length h2 to be equal to or less than the first length h1, damage to the gasket 240 may be prevented, and a sealing effect of the gasket 240 may be improved.

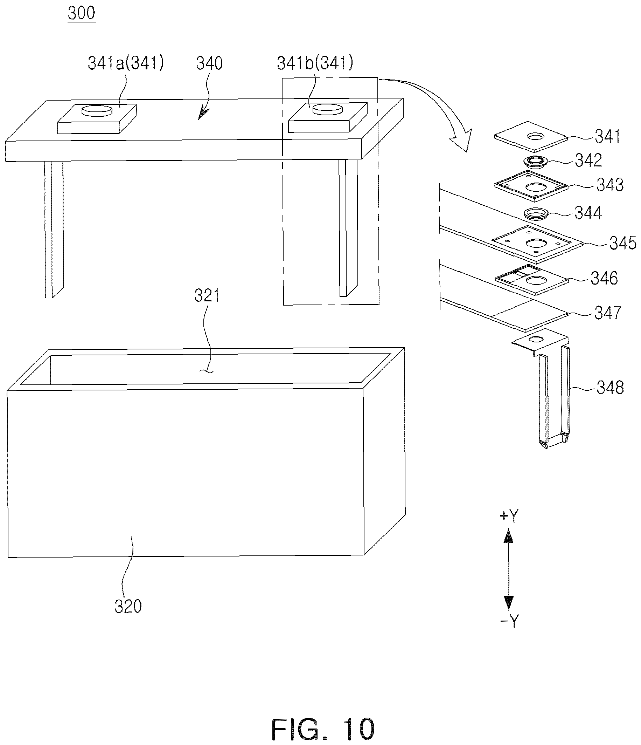

FIG. 10 is an exploded perspective view of a battery cell according to another embodiment.

Referring to FIG. 10, a battery cell 300 may include a case 320 and a cap assembly 340. The cap assembly 340 may include a terminal plate 341, a rivet 342, an insulator 343, a gasket 344, a cap plate 345, an insulating plate (346 and 347), and a current collecting member 348. For convenience of explanation in FIG. 10, it is illustrated that an electrode assembly (e.g., electrode assembly 110 of FIG. 3) is excluded.

At least a portion of descriptions of the battery cell 100, the case 120, and the cap assembly (140, 150, and 200) of FIGS. 2, 3, 4, 6, and/or 7 may be applied to the battery cell 300, the case 320, and the cap assembly 340 of FIG. 10. For example, at least a portion of descriptions of the terminal plate (141 and 151), the rivet (142 and 152), the insulator 143 (or resistor 153), the gasket (144 and 154), the cap plate (145 and 155), the insulating plate (146 and 156), and the current collecting plate 147 (or current collecting member 170) of FIGS. 2 and/or 3 may be applied to the terminal plates 341, the rivet 342, the insulator 343, the gasket 344, the cap plate 345, the insulating plate (346 and 347), and the current collecting member 348.

FIGS. 1, 2, and/or 3 illustrate a structure in which the battery cell 100 is a square battery cell of which both sides open, but is illustrative. For example, according to an embodiment (e.g., FIG. 10), the battery cell 300 may be a square battery cell of which a single direction opens.

The cap assembly 340 may include the cap plate 345 connected to a plurality of terminal plates 341a and 341b. The plurality of terminal plates 341a and 341b may be disposed to face the same direction with respect to the cap plate 345. For example, the terminal plate 341 may include a first terminal plate 341a disposed on a portion of the cap plate 345, and a second terminal plate 341b disposed on another portion of the cap plate 345 and spaced apart from the first terminal plate 341a.

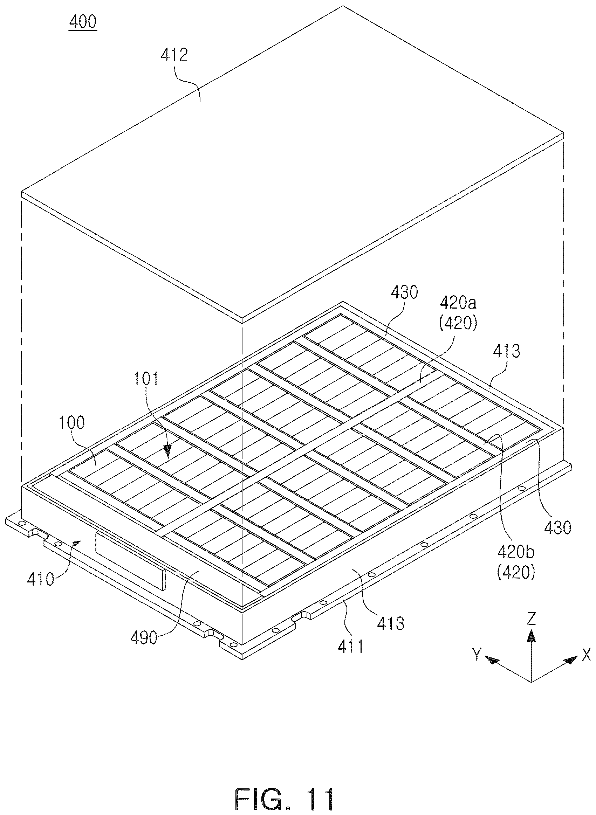

FIG. 11 is an exploded perspective view of a battery device according to an embodiment.

Referring to FIG. 11, a battery device 400 may include a plurality of cell assemblies 101 and a frame 410 accommodating the plurality of cell assemblies 101.

Each of the plurality of cell assemblies 101 may include a plurality of battery cells 100. Each of the plurality of battery cells 100 may be a square battery cell including a cap assembly (e.g., cap assembly 200 of FIG. 4, FIG. 6, and/or FIG. 7). For example, description of the battery cell 100 described previously may be applied to the battery cell 100 of FIG. 11.

The battery device 400 may be referred to as a battery module or a battery pack.

The frame 410 may accommodate components of the battery device 400 (e.g., cell assemblies 101). The frame 410 may include a bottom member 411 supporting the battery cells 100, a cover member 412 covering the cell assemblies 101, and a side wall 413 surrounding at least a portion of the bottom member 411 and the cover member 412.

The frame 410 may include a partition wall 420 crossing at least a portion of the plurality of cell assemblies 101. For example, an accommodating space of the frame 410 may be divided into a plurality of spaces by the partition wall 420. The partition wall 420 may be installed across the accommodating space to reinforce rigidity of the frame 410. In an embodiment, the partition wall 420 may include a first partition wall 420a crossing the plurality of battery cells 100, and a plurality of second partition walls 420b, substantially perpendicular to the first partition wall 420a.

In an embodiment, the battery device 400 may include a duct member 430. The duct member 430 may include an exhaust space for providing a path for gases and/or flames discharged from the battery cells 100. The duct member 430 may be disposed within the frame 410. The duct member 430 may surround at least a portion of the cell assembly 101. For example, gases and/or flames generated by the battery cells of the cell assembly 101 (e.g., battery cells 100 of FIG. 1) may pass through the exhaust space of the duct member 430 to an external space of the battery device 400. In the present disclosure, the duct member 430 may be referred to as an exhaust duct or an exhaust member.

The battery device 400 may include a battery control unit 490 for controlling the battery cells 100. The battery control unit 490 may be disposed in the frame 410. The battery control unit 490 may include a battery management system (BMS). Since a configuration of the battery control unit 490 may be known in various forms, a detailed description thereof will be omitted. In an embodiment, the battery control unit 490 may be referred to as a processor.

A structure of the battery device 400 of FIG. 11 is illustrative. For example, the number of battery cells 100 included in the battery device 400, a structure of the frame 410 and/or a structure of the duct member 430 may be selectively designed.

According to an embodiment of the present disclosure, a sealing effect of a cap assembly may increase, and leakage of a material (e.g., electrolyte) in a battery cell may be prevented.

According to an embodiment of the present disclosure, allowable ranges of assembly and manufacturing tolerances may increase, and a deviation in sealing performance may be reduced.

(Aspect 1) A battery cell comprising: an electrode assembly; a case accommodating the electrode assembly; and a cap assembly sealing an opening of the case, wherein the cap assembly includes a terminal plate at least partially exposed to an external space of the cap assembly, a cap plate coupled to the case, a rivet connecting the terminal plate and the cap plate, and a gasket surrounding at least a portion of the rivet, the rivet includes a pillar portion at least partially surrounded by the cap plate, a protrusion portion extending from an outer peripheral surface of the pillar portion, and a first flange extending from the pillar portion and located between the terminal plate and the gasket, and the gasket includes a first sealing region at least partially located between the protrusion portion and the cap plate, and a second sealing region located between the first flange and the cap plate.

(Aspect 2) The battery cell of aspect 1, wherein the protrusion portion includes a first surface extending from the outer peripheral surface, and a second surface extending from the outer peripheral surface to the first surface and closer to the electrode assembly than the first surface, a second angle between the second surface and the outer peripheral surface is smaller than a first angle between the first surface and the outer peripheral surface.

(Aspect 3) The battery cell of aspect 2, wherein a length of the second surface is formed to be longer than a length of the first surface.

(Aspect 4) The battery cell of any one of aspects 1 to 3, wherein the cap plate includes a support surface contacting the second sealing region of the gasket, and a protrusion region protruding from the support surface toward the first flange and pressing the gasket.

(Aspect 5) The battery cell of aspect 4, wherein the protrusion region protrudes from the support surface by a first length, and the protrusion portion protrudes from the outer peripheral surface by a second length, equal to or less than the first length.

(Aspect 6) The battery cell of any one of aspects 1 to 5, wherein the protrusion portion includes a plurality of protruding patterns contacting the gasket.

(Aspect 7) The battery cell of any one of aspects 1 to 6, wherein the rivet includes a second flange extending from the pillar portion and spaced apart from the first flange, and the protrusion portion is located between the first flange and the second flange.

(Aspect 8) The battery cell of aspect 7, wherein the cap assembly includes an insulating plate disposed below the cap plate, at least a portion of the cap plate is located between the first flange and the second flange, and at least a portion of the insulating plate is located between the cap plate and the second flange.

(Aspect 9) The battery cell of aspect 7 or 8, wherein the cap assembly further includes a current collecting plate connected to the second flange of the rivet, and the terminal plate is electrically connected to the electrode assembly using the rivet and the current collecting plate.

(Aspect 10) The battery cell of any one of aspects 1 to 9, further includes a current collecting member connected to the electrode assembly, wherein the rivet includes a connecting hole penetrating through the pillar portion, the terminal plate is electrically connected to the electrode assembly using the rivet and the current collecting member, and the current collecting member inserted into the connection hole.

(Aspect 11) The battery cell of any one of aspects 1 to 10, wherein the case includes a first opening formed in one side, and a second opening formed in the other side and connected to the first opening, and the cap assembly includes a first cap assembly sealing the first opening, and a second cap assembly sealing the second opening.

(Aspect 12) The battery cell of aspect 11, wherein the first cap assembly includes an insulator surrounding at least a portion of the terminal plate and at least partially located between the terminal plate and the cap plate, the second cap assembly includes a resistor surrounding at least a portion of the terminal plate and at least partially located between the terminal plate and the cap plate, and an electrical conductivity of the resistor is higher than an electrical conductivity of the insulator.

(Aspect 13) The battery cell of aspect 12, wherein the terminal plate includes an outer surface, an inner surface opposite to the outer surface and facing the insulator, and a first through-hole penetrating through the outer surface and the inner surface, the cap plate includes an upper surface facing the insulator, a lower surface opposite to the upper surface, and a second through-hole penetrating through the upper surface and the lower surface, the insulator includes a third through-hole located between the first through-hole and the second through-hole, the rivet is inserted into the first through-hole, the second through-hole, and the third through-hole, and the protrusion portion is located in the second through-hole.

(Aspect 14) The battery cell of any one of aspects 1 to 13, wherein the cap plate is connected to a plurality of terminal plates, and the plurality of terminal plates are disposed in the same direction with respect to the cap plate.

(Aspect 15) A battery device comprising: a cell assembly including a plurality of battery cells; and a frame accommodating the cell assembly, wherein each of the plurality of battery cells includes an electrode assembly, a case accommodating the electrode assembly, and a cap assembly sealing an opening of the case, wherein the cap assembly includes a terminal plate at least partially exposed to an external space of the cap assembly, a cap plate coupled to the case, a rivet connecting the terminal plate and the cap plate, and a gasket surrounding at least a portion of the rivet, the rivet includes a pillar portion at least partially surrounded by the cap plate, a protrusion portion extending from an outer peripheral surface of the pillar portion, and a first flange extending from the pillar portion and located between the terminal plate and the gasket, and the gasket includes a first sealing region at least partially located between the protrusion portion and the cap plate, and a second sealing region located between the first flange and the cap plate.

## Claims

1. A battery cell comprising:
an electrode assembly;
a case accommodating the electrode assembly; and
a cap assembly sealing an opening of the case,
wherein the cap assembly includes a terminal plate at least partially exposed to an external space of the cap assembly, a cap plate coupled to the case, a rivet connecting the terminal plate and the cap plate, and a gasket surrounding at least a portion of the rivet,
the rivet includes a pillar portion at least partially surrounded by the cap plate, a protrusion portion extending from an outer peripheral surface of the pillar portion, and a first flange extending from the pillar portion and located between the terminal plate and the gasket, and
the gasket includes a first sealing region at least partially located between the protrusion portion and the cap plate, and a second sealing region located between the first flange and the cap plate.

2. The battery cell of claim 1, wherein the protrusion portion includes a first surface extending from the outer peripheral surface, and a second surface extending from the outer peripheral surface to the first surface and closer to the electrode assembly than the first surface,
a second angle between the second surface and the outer peripheral surface is smaller than a first angle between the first surface and the outer peripheral surface.

3. The battery cell of claim 2, wherein a length of the second surface is formed to be longer than a length of the first surface.

4. The battery cell of any one of claims 1 to 3, wherein the cap plate includes a support surface contacting the second sealing region of the gasket, and a protrusion region protruding from the support surface toward the first flange and pressing the gasket.

5. The battery cell of claim 4, wherein the protrusion region protrudes from the support surface by a first length, and
the protrusion portion protrudes from the outer peripheral surface by a second length, equal to or less than the first length.

6. The battery cell of any one of claims 1 to 5, wherein the protrusion portion includes a plurality of protruding patterns contacting the gasket.

7. The battery cell of any one of claims 1 to 6, wherein the rivet includes a second flange extending from the pillar portion and spaced apart from the first flange, and
the protrusion portion is located between the first flange and the second flange.

8. The battery cell of claim 7, wherein the cap assembly includes an insulating plate disposed below the cap plate,
at least a portion of the cap plate is located between the first flange and the second flange, and
at least a portion of the insulating plate is located between the cap plate and the second flange.

9. The battery cell of claim 7 or 8, wherein the cap assembly further includes a current collecting plate connected to the second flange of the rivet, and
the terminal plate is electrically connected to the electrode assembly using the rivet and the current collecting plate.

10. The battery cell of any one of claims 1 to 9, further includes a current collecting member connected to the electrode assembly,
wherein the rivet includes a connecting hole penetrating through the pillar portion,
the terminal plate is electrically connected to the electrode assembly using the rivet and the current collecting member, and
the current collecting member is inserted into the connection hole.

11. The battery cell of any one of claims 1 to 10, wherein the case includes a first opening formed in one side, and a second opening formed in the other side and connected to the first opening, and
the cap assembly includes a first cap assembly sealing the first opening, and a second cap assembly sealing the second opening.

12. The battery cell of claim 11, wherein the first cap assembly includes an insulator surrounding at least a portion of the terminal plate and at least partially located between the terminal plate and the cap plate,
the second cap assembly includes a resistor surrounding at least a portion of the terminal plate and at least partially located between the terminal plate and the cap plate, and
an electrical conductivity of the resistor is higher than an electrical conductivity of the insulator.

13. The battery cell of claim 12, wherein the terminal plate includes an outer surface, an inner surface opposite to the outer surface and facing the insulator, and a first through-hole penetrating through the outer surface and the inner surface,
the cap plate includes an upper surface facing the insulator, a lower surface opposite to the upper surface, and a second through-hole penetrating through the upper surface and the lower surface,
the insulator includes a third through-hole located between the first through-hole and the second through-hole,
the rivet is inserted into the first through-hole, the second through-hole, and the third through-hole, and
the protrusion portion is located in the second through-hole.

14. The battery cell of any one of claims 1 to 13, wherein the cap plate is connected to a plurality of terminal plates, and
the plurality of terminal plates are disposed in the same direction with respect to the cap plate.

15. A battery device comprising:
a cell assembly including a plurality of battery cells; and
a frame accommodating the cell assembly,
wherein each of the plurality of battery cells includes an electrode assembly, a case accommodating the electrode assembly, and a cap assembly sealing an opening of the case,
wherein the cap assembly includes a terminal plate at least partially exposed to an external space of the cap assembly, a cap plate coupled to the case, a rivet connecting the terminal plate and the cap plate, and a gasket surrounding at least a portion of the rivet,
the rivet includes a pillar portion at least partially surrounded by the cap plate, a protrusion portion extending from an outer peripheral surface of the pillar portion, and a first flange extending from the pillar portion and located between the terminal plate and the gasket, and
the gasket includes a first sealing region at least partially located between the protrusion portion and the cap plate, and a second sealing region located between the first flange and the cap plate.
